# EUROPÄISCHE PATENTSCHRIFT

(11) **EP 2 459 675 B1**
(45) Veröffentlichungstag und Bekanntmachung des Hinweises auf die Patenterteilung: **25.02.2015**
(21) Anmeldenummer: 10776621.4
(22) Anmeldetag: 25.10.2010
(51) Int. Cl.: C09K 11/66, C09K 11/73, C09K 11/77, C09K 11/76, H01J 61/44

(54) **LEUCHTSTOFFZUSAMMENSETZUNG FÜR NIEDERDRUCKENTLADUNGSLAMPEN**
LUMINOPHORE COMPOSITION FOR LOW PRESSURE DISCHARGE LAMPS
COMPOSITION DE SUBSTANCE FLUORESCENTE POUR LAMPES À DÉCHARGE À BASSE PRESSION

(30) Priorität: 09.11.2009 DE 102009052468
(43) Veröffentlichungstag der Anmeldung: 06.06.2012
(73) Patentinhaber: OSRAM GmbH, 80807 München (DE)
(72) Erfinder: KONRAD, Armin, 86845 Großaitingen (DE); HELD, Claudia, 86447 Aindling (DE); GOEBEL, Nina, 86368 Gersthofen (DE)
(86) Internationale Anmeldenummer: PCT/EP2010/066040
(87) Internationale Veröffentlichungsnummer: WO 2011/054691

(56) Entgegenhaltungen:
- EP-A2- 1 306 885
- EP-A2- 1 676 900
- WO-A2-2005/074005
- DE-A1- 19 722 404
- JP-A- 2005 230 171
- US-A1- 2008 211 378

## Beschreibung

Die vorliegende Erfindung betrifft eine Leuchtstoffzusammensetzung für Niederdruckentladungslampen gemäß dem Oberbegriff des Anspruchs 1 sowie eine Niederdruckentladungslampe gemäß dem Oberbegriff des Anspruchs 15.

Aus der EP 1 306 885 B1 ist eine Leuchtstoffzusammensetzung für eine Niederdruckentladungslampe sowie eine Niederdruckentladungslampe bekannt, die eine hohe Lichtausbeute bei einer Farbtemperatur größer 5000 K und einer guten Farbwiedergabe aufweist. Durch das Ansteigen der Anforderungen in der Farbabmusterung bei der Reprografie, kann mit dieser Leuchtstoffzusammensetzung kein optimales Ergebnis im nahen ultravioletten Spektralbereich erzielt werden.

Die Aufgabe der vorliegenden Erfindung ist es, eine Leuchtstoffzusammensetzung für Niederdruckentladungslampen sowie eine Niederdruckentladungslampe mit einer solchen Leuchtstoffzusammensetzung bereitzustellen, die besonders gut für die Farbabmusterung, insbesondere gemäß ISO 3664:2009(E), geeignet ist. Die Eignung der Lichtfarbe und die Farbqualität werden hierbei durch verschiedene genormte Verfahren bestimmt und quantifiziert. Gleichzeitig soll ein hoher Lichtstrom erzielbar sein.

Diese Aufgabe wird gelöst durch eine Leuchtstoffzusammensetzung für Niederdruckentladungslampen mit den Merkmalen des Anspruchs 1 sowie durch eine Niederdruckentladungslampe mit den Merkmalen des Anspruchs 17.

Eine solche Leuchtstoffzusammensetzung für Niederdruckentladungslampen sowie eine mit einer solchen ausgestattete Niederdruckentladungslampe werden beispielsweise bei der Farbabmusterung verwendet und können in Grafik- und Druckereibetrieben, der Lack- und Farbenindustrie sowie in Museen zum Einsatz kommen.

Besonders vorteilhafte Ausgestaltungen finden sich in den abhängigen Ansprüchen.

Eine erfindungsgemäße Leuchtstoffzusammensetzung für Niederdruckentladungslampen beinhaltet zumindest einen Halophosphat-Leuchtstoff, einen im roten Wellenlängenbereich emittierenden Leuchtstoff, einen im blaugrünen Wellenlängenbereich emittierenden Leuchtstoff, einen mit Europium dotierten im blauen Wellenlängenbereich emittierenden Leuchtstoff sowie einen mit Tb dotierten im grünen Wellenlängenbereich emittierenden Leuchtstoff und einen Leuchtstoff mit einem Emissionsbereich im sichtbaren Bereich mit Wellenlängen größer 380nm und Emissionsbanden im nahen Ultraviolett (UV-A). Unter nahem Ultraviolett (UV-A) wird der Bereich mit Wellenlängen zwischen 315 nm und 380 nm verstanden. Durch das erfindungsgemäße Vorsehen eines Leuchtstoffs mit einem Emissionsbereich im sichtbaren Spektralbereich, also Strahlung einer Wellenlänge zwischen 380nm und 780nm, der auch mindestens eine Emissionsbande im angrenzenden nahen Ultraviolettbereich (UV-A-Bereich) aufweist, der Strahlung mit Wellenlängen zwischen 380nm und 315nm umfasst, und bei dem die emittierte Intensität des Leuchtstoffs im sichtbaren Bereich kleiner als diejenige im UV-A-Bereich ist, kann bei Niederdruckentladungslampen mit der Leuchtstoffzusammensetzung eine besonders gute Eignung der erzeugbaren Strahlung zur Farbabmusterung gewährleistet werden. Unter emittierter Intensität wird hierbei die über die Wellenlängen aufintegrierte Strahldichteverteilung gemeint, die emittierte Intensität entspricht der emittierten Strahlungsleistung und wird in Watt gemessen. Die Strahldichteverteilung kann mit einem Fluoreszenzspektrometer bestimmt werden, beispielsweise mit FluoroMax-2 von ISA-Spex Instruments (Edison, USA). Bei der Messung wird die emittierte Strahldichteverteilung in 45 / 90 Grad Geometrie bestimmt, wobei eine in Tablettenform gepresste Pulverprobe, typischerweise ca. 2 - 5mm dick, in den Strahlengang des Spektrometers gebracht wird. Die Probe wird mit UV-C Strahlung der Wellenlänge 254nm bestrahlt. Der Winkel zwischen einfallender Strahlung und der Probenoberfläche der Tablette beträgt dabei 45 Grad. Mittels eines im Gerät integrierten Emissionsmonochromators, beispielsweise einem Gittermonochromator, wird die senkrecht zur Oberfläche der Tablette emittierte Strahldichteverteilung mithilfe eines Photomultiplers bestimmt. Zur Bestimmung der emittierten Intensität wird diese über den entsprechenden Wellenlängenbereich aufintegriert. Bei Messung der Strahldichteverteilung einer Niederdruckentladungslampe bzw. einer in eine Leuchte eingesetzten Niederdruckentladungslampe kann die Strahldichteverteilung mit einem Diodenarrayspektometer gemessen werden. Hierbei wird die Leuchtstoffzusammensetzung von einem Quecksilberplasma angeregt, die emittierte Strahlung wird nach Wellenlängen aufgespalten, und die emittierte Strahlungsleistung (W) in Abhängigkeit von der Wellenlänge (nm) gemessen.

Mit der erfindungsgemäßen Leuchtstoffzusammensetzung kann Strahlung mit einer Farbtemperatur größer 4800 K erzeugt werden, die einen sehr guten allgemeinen Farbwiedergabeindex (Color Rendering Index) CRI größer 90 und insbesondere größer 95 hat, der gemäß Normfarbsystem CIE 13-3-1995 bestimmbar ist. Bei einem Wert von CRI=100 scheinen alle Farbmuster, die von der getesteten Lichtquelle beleuchtet werden, dieselbe Farbe zu haben, wie bei Beleuchtung mit einer Referenzlichtquelle.

Besonders bevorzugt hat die erzeugbare Strahlung eine Farbtemperatur im Bereich von 4800 K bis 5700 K und insbesondere von in etwa 5300 K.

Durch die Emission im UV-A-Spektralbereich kann zudem eine verbesserte Bewertung von Fluoreszenz-Effekten erfolgen, wie sie beispielsweise durch Sonnenlicht erzeugt werden. Somit können die Anforderungen gemäß dem ISO-Standard 3664 für die Abmusterung in der Reprografie in der Fassung vom 15.04.2009 erfüllt werden. Bei dem ISO-Standard 3664 handelt es sich um eine Applikationsnorm, hierbei werden die Eigenschaften einer Lampe in einer Leuchte bestimmt, insbesondere werden die Eigenschaften einer bestrahlten Fläche bestimmt und bewertet. Die Farbqualität und die Eignung der Lichtfarbe wird hier unter anderem durch Vergleich der Farbwiedergabe metamerer Paare ermittelt und durch den sogenannten Metamerie-Index angegeben. Ein Metamerie-Index von 0 bedeutet, dass die metameren Paare bei Beleuchtung mit der getesteten Lichtquelle dieselbe Farbe, d.h. den selben Farbort x,y, haben, wie bei Beleuchtung mit einer Referenzlichtquelle.

Der ISO-Standard 3664 fordert im Sichtbaren einen Metamerie-Index M_vis <= 1.0 sowie im Ultravioletten einen Metamerie-Index von M_uv <= 1,5. Je kleiner der Wert der Metamerie-Indizes, desto besser werden die natürlichen Eigenschaften reproduziert. Der Metamerie-Index M_uv ist hierbei ein Maß für die Bewertungsmöglichkeit von fluoreszierenden Effekten, wie sie beispielsweise durch Sonnenlicht im Spektralbereich von 300nm - 400nm erzeugt werden. Bei bisher bekannten Leuchtstoffmischungen konnte hingegen bei Einsatz in Niederdruckentladungslampen nur ein Metamerie-Index M_uv in der Größenordnung von 4 erreicht werden.

Gemäß einer bevorzugten Ausgestaltung der erfindungsgemäßen Leuchtstoffzusammensetzung beträgt die von dem Leuchtstoff mit einem Emissionsbereich im sichtbaren Spektralbereich, der auch mindestens eine Emissionsbande im angrenzenden nahen Ultraviolettbereich (UV-A-Bereich) aufweist, im sichtbaren Bereich emittierte Intensität dabei zwischen 2% und 20% der durch den Leuchtstoff im nahen Ultraviolett (UV-A) emittierten Intensität. Durch diese Verteilung kann eine besonders gute Eignung der Leuchtstoffzusammensetzung für die Farbabmusterung mit ausreichend guter Farbwiedergabe im nahen Ultraviolettbereich sichergestellt werden.

Gemäß einer besonders bevorzugten Ausgestaltung der Erfindung kann als Leuchtstoff mit einem Emissionsbereich im sichtbaren Bereich mit Wellenlängen größer 380nm und Emissionsbanden im nahen Ultraviolett (UV-A), kurz im UV-A emittierender Leuchtstoff, mit Europium dotiertes Strontiumtetraborat, SrB₄O₇:Eu, vorgesehen sein. Dieses hat ein Emissionsmaximum bei 368nm mit einer Halbwertsbreite FWHM von 40 - 50 nm, so dass die Emission sowohl im sichtbaren als auch im UV-A Spektralbereich erfolgt.

Bei einer Messung von mit Europium dotiertem Strontiumtetraborat, SrB₄O₇:Eu mit einem Fluoreszenzspektrometer, nämlich mit FluoroMax-2 von ISA-Spex Instruments (Edison, USA), ergeben sich bei einer Messgenauigkeit von +/- 2% folgende Werte für die emittierte Intensität in Watt.

| Wellenlängenbereich [nm] | emittierte Intensität [Watt] | prozentualer Anteil an Gesamt-Intensität [%] |
|---|---|---|
| 315 - 780 | 1989,3 | 100,0 |
| 315 - 380 | 1724,4 | 86,7 |
| 380 - 780 | 264,9 | 13,3 |

Hieraus ist ersichtlich, dass dieser Leuchtstoff einen Emissionsbereich im sichtbaren Bereich mit Wellenlängen größer 380nm und mindestens eine Emissionsbande im nahen Ultraviolett (UV-A) beinhaltet und die emittierte Intensität des Leuchtstoffs im sichtbaren Bereich kleiner als im UV-A Bereich ist und insbesondere die im sichtbaren Bereich emittierte Intensität des Leuchtstoffs zwischen 2% und 20% der durch den Leuchtstoff im nahen Ultraviolett (UV-A) emittierten Intensität beträgt, nämlich 15,4%.

Alternativ oder zusätzlich können auch mit Europium dotiertes StrontiumMagnesiumphosphat SrMgP₂O₇:Eu und/oder mit Europium dotiertes StrontiumBarium-AluminiumSilikat (Sr,Ba)Al₂Si₂O₈:Eu und/oder mit Europium dotiertes Strontiumphospat Sr₃(PO₄):Eu und/oder CalciumWolframat CaWO₄ als im UV-A emittierender Leuchtstoff vorgesehen sein. Die genannten, im UV-A emittierenden Leuchtstoffe können also einzeln oder in Kombination in der Leuchtstoffzusammensetzung beinhaltet sein. Insbesondere die Verwendung von Eu dotierten, im UV-A emittierenden Leuchtstoffen hat sich als vorteilhaft herausgestellt.

Bei der erfindungsgemäßen Leuchtstoffzusammensetzung kann der Gewichtsanteil des im UV-A emittierenden Leuchtstoffs an der Leuchtstoffzusammensetzung zwischen 5% und 30% betragen. Als besonders vorteilhaft hat sich ein Gewichtsanteil zwischen 10% und 15% an der gesamten Leuchtstoffzusammensetzung erwiesen, da sich hier die gewünschten Anforderungen besonders gut erfüllen lassen.

Gemäß einer weiteren bevorzugten Ausbildung der Erfindung kann die Leuchtstoffzusammensetzung als Halophosphat-Leuchtstoff mit Sb und Mn dotiertes Ca₁₀(PO₄)₆(F, Cl)₂:Sb,Mn beinhalten. Besonders vorteilhafterweise kann der Gewichtsanteil des Halophosphat-Leuchtstoffs, und insbesondere des Calciumhalophosphats an der Leuchtstoffzusammensetzung zwischen 20% und 26% betragen.

Eine erfindungsgemäße Leuchtstoffzusammensetzung kann gemäß einer weiteren bevorzugten Ausgestaltung mit Ce und Mn dotiertes Gadoliniumzinkmagnesiumpentaborat Gd(Zn,Mg)B₅O₁₀:Ce, Mn als im roten Wellenlängenbereich emittierenden Leuchtstoff beinhalten. Hierdurch kann die Farbwiedergabe der erfindungsgemäßen Leuchtstoffzusammensetzung weiter verbessert werden.

Der Gewichtsanteil des im roten Wellenlängenbereich emittierenden Leuchtstoffs an der Leuchtstoffzusammensetzung kann vorteilhafterweise zwischen 30% und 36% betragen.

Erfindungsgemäß kann bei der Leuchtstoffzusammensetzung als im blaugrünen Wellenlängenbereich emittierender Leuchtstoff mit Eu dotiertes Strontiumaluminat Sr₄Al₁₄O₂₅:Eu vorgesehen sein.

Vorteilhafterweise kann der Gewichtsanteil des im blaugrünen Wellenlängenbereich emittierenden Leuchtstoffs an der Leuchtstoffzusammensetzung zwischen 20% und 26% liegen.

Gemäß einer weiteren vorteilhaften Ausgestaltung der Erfindung kann die Leuchtstoffzusammensetzung als mit Tb dotierten grün emittierenden Leuchtstoff mit Tb dotiertes Cermagnesiumaluminat CeMgAl₁₁O₁₉:Tb beinhalten. Es können jedoch auch andere mit Tb dotierte Seltenerdaluminate zum Einsatz kommen.

Der Gewichtsanteil des mit Tb dotierten grün emittierenden Leuchtstoffs an der Leuchtstoffzusammensetzung kann bevorzugt zwischen 2% und 8% betragen.

Weiter vorteilhaft kann in der erfindungsgemäßen Leuchtstoffzusammensetzung als mit Europium dotierter blau emittierender Leuchtstoff mit Eu dotiertes Bariummagnesiumaluminat BaMgAl₁₀O₁₇:Eu und/oder mit Eu und Mn dotiertes Bariummagnesiumaluminat BaMg₂Al₁₆O₂₇:Eu,Mn und/oder mit Eu dotiertes Strontium-Chlörophosphat Sr₁₀(PO₄)Cl₂:EU und/oder mit Eu dotiertes StrontiumCalcium-Clorophosphat (Sr,Ca)₁₀(PO₉)Cl₂:Eu vorgesehen sein. Diese können einzeln oder in beliebiger Mischung in der Leuchtstoffzusammensetzung beinhaltet sein.

Als besonders vorteilhaft hat es sich erwiesen, wenn der Gewichtsanteil des mit Eu dotierten blau emittierenden Leuchtstoffs an der Leuchtstoffzusammensetzung zwischen 0% und 6% beträgt.

Erfindungsgemäß kann bei der Leuchtstoffzusammensetzung ein im dunkelroten Wellenlängenbereich emittierender Leuchtstoff, insbesondere mit Mn dotiertes Magnesiumfluorogermanat Mg₄FGeO_{5,5}:Mn vorgesehen sein.

Vorteilhafterweise kann der Gewichtsanteil des im dunkelroten Wellenlängenbereich emittierenden Leuchtstoffs an der Leuchtstoffzusammensetzung zwischen 0% und 5% liegen.

Die vorliegende Erfindung betrifft auch eine Niederdruckentladungslampe mit einem Entladungsgefäß und einer auf der Innenseite desselben aufgebrachten Leuchtstoffbeschichtung, bei der die Leuchtstoffbeschichtung eine erfindungsgemäße Leuchtstoffzusammensetzung umfasst.

Insbesondere kann die Leuchtstoffbeschichtung nur aus der erfindungsgemäßen Leuchtstoffzusammensetzung bestehen. Die erfindungsgemäße Leuchtstoffzusammensetzung kann in Form einer einzigen Leuchtstoffmischung, insbesondere auch in Form einer einzigen Schicht, oder in Form mehrerer Schichten aufgebracht sein. Hierbei können einzelne Schichten verschiedene Bestandteile der erfindungsgemäßen Leuchtstoffzusammensetzung enthalten. Besonders bevorzugt kann eine einem Entladungsraum der Niederdruckentladungslampe zugewandte Schicht alle Bestandteile der erfindungsgemäßen Leuchtstoffzusammensetzung enthalten.

Eine solche Niederdruckentladungslampe kann vorteilhaft bei der Farbabmusterung zum Einsatz kommen. Insbesondere lassen sich mit einer solchen Niederdruckentladungslampe die bereits erwähnten Anforderungen gemäß dem ISO-Standard 3664 für die Abmusterung in der Reprografie erfüllen.

Das Tageslichtspektrum, das einen UV-Anteil enthält, kann mit der erfindungsgemäßen Niederdruckentladungslampe, deren Entladungsgefäß für Strahlung im UV-A-Spektralbereich durchlässig ist, besonders gut nachgebildet werden.

Die Leuchtstoffzusammensetzung ist bevorzugt in Form einer einzigen Leuchtstoffmischung auf der Innenseite des Entladungsgefäßes aufgebracht und besteht dabei aus einer einzigen Schicht.

Es kann aber auch von Vorteil sein, die Leuchtstoffzusammensetzung in Form von zwei oder mehr Schichten aufzubringen. Hier kann beispielsweise die der Innenseite des Entladungsgefäßes zugewandte Unterschicht nur aus dem Halophosphatleuchtstoff bestehen, während eine der Entladung zugewandte Deckschicht dann ebenfalls den Halophosphatleuchtstoff und die anderen Leuchtstoffe der Leuchtstoffmischung enthalten sollte.

Zusätzlich kann zwischen der Innenseite des Entladungsgefäßes und der Leuchtstoffschicht eine Schutzschicht aus Al₂O₃, Y₂O₃ oder einem Seltenerdoxid aufgebracht sein. Hierdurch kann eine Diffusion des im Entladungsgefäß vorhandenen Quecksilbers in das Entladungsgefäß und eine damit einhergehende Schwärzung desselben effektiv verhindert werden.

Die erfindungsgemäße Leuchtstoffzusammensetzung kann vorteilhaft an die Transmissions- und Reflexionseigenschaften der Leuchte angepasst werden, in der sie zum Einsatz kommen soll. Von Bedeutung ist hier beispielsweise, ob und welche Art von Kunststoff oder Glas als Abdeckung verwendet wird, das Material und die Ausgestaltung des Reflektors sowie weitere Merkmale.

Die erfindungsgemäße Leuchtstoffzusammensetzung kann insbesondere bei stabförmigen Niederdruckentladungslampen, beispielsweise der Bauform T8 L36W, zum Einsatz kommen.

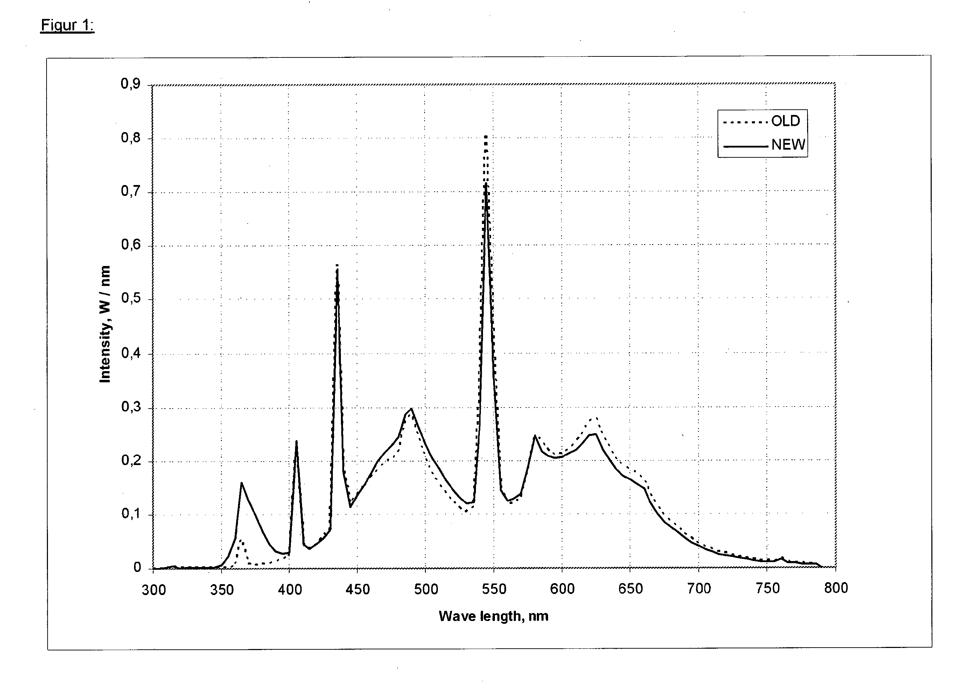

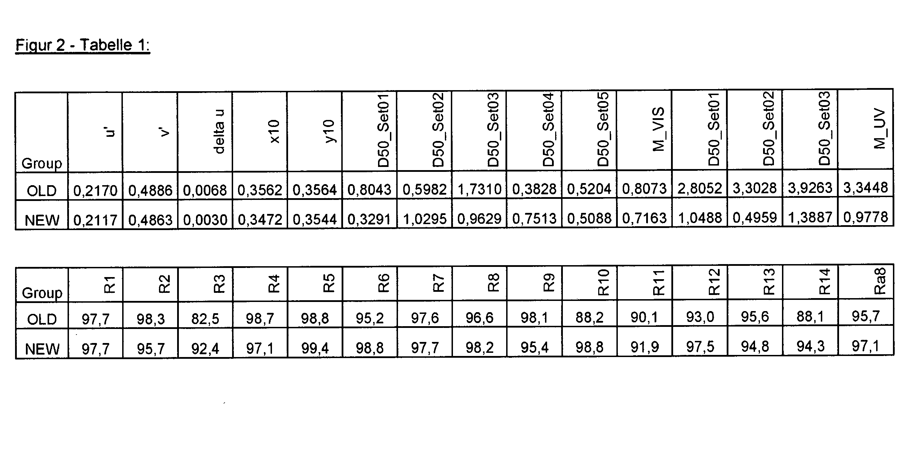

Im Folgenden soll die Erfindung anhand eines Ausführungsbeispiels näher erläutert werden. In der Figur 1 ist die Strahldichteverteilung, in der als Figur 2 beiliegenden Tabelle 1 sind Messwerte dieses Ausführungsbeispiels im Vergleich zu einer bekannten Niederdruckentladungslampe dargestellt. Bei der bekannten Niederdruckentladungslampe handelte es sich um eine OSRAM LUMILUX COLOR proof T8, L36W/950, Modelljahr 2008.

Die Innenseite von Entladungsgefäßen stabförmiger Quecksilber-T8-Niederdruckentladungslampen einer Länge von ca. 120 cm mit einer Krypton-Argon-Gasfüllung und einer Nenn-Leistung von 36 W wurde mit einer erfindungsgemäßen Leuchtstoffzusammensetzung beschichtet. Diese wurde in Form einer einzigen Schicht aufgebracht.

Die Leuchtstoffzusammensetzung war wie folgt zusammengesetzt:

| | |
|---|---|
| CeMgAl₁₁O₁₉:Tb | 5,15% |
| BaMgAl₁₀O₁₇:Eu | 2,54% |
| Ca₁₀(PO₄)₆(F, Cl)₂:Sb,Mn,Cl | 22,95% |
| SrB₄O₇:Eu | 11,91% |
| Sr₄Al₁₄O₂₅:Eu | 23,48% |
| Gd(Zn,Mg)B₅O₁₀:Ce,Mn | 32,58% |
| Mg₄FGeO_{5,5}:Mn | 1,39% |

Mit solchermaßen beschichteten Niederdruckentladungslampen wurden folgende Testergebnisse erzielt. Bei Messungen, die eine Leuchte erfordern, kam eine Leuchte der Firma Waldmann für die Farbabmusterung zum Einsatz. Hierbei handelte es sich um die Auflichtleuchte LE - ALEA 436 für vier 36W T8 L36W Lampen mit der Artikelnummer 682742000. Die Testergebnisse für die bekannte Niederdruckentladungslampe wurden unter Verwendung derselben Leuchte gewonnen.

Der Lichtstrom betrug bei Messung in der Ulbricht-Kugel gemäß Norm IEC 60081 2300 Lm, dieser Wert entspricht im wesentlichen dem der bekannten Niederdruckentladungslampe.

Bei Messung in der Ulbricht-Kugel unter Standard IEC-Bedingungen wurde eine Chromatizität gemäß der Zielchromatizität für einen CIE 1931 Farbraumbetrachter von x/y = 0.337/0.348 erzielt, der Farbwiedergabeindex CRI gemäß CIE 13-3-1995 betrug mindestens 95. Der Metamerie-Index im Sichtbaren gemäß CIE 51.2-1999 betrug M_vis <= 1.1, derjenige im Ultravioletten M_uv <= 1,5.

Die Messungen in der Ulbricht-Kugel erfolgen an den Lampen, nicht mit der Leuchte.

Bei einer Charakterisierung gemäß ISO-Standard 3664:2009 ergeben sich folgende Werte. Die entsprechenden Messungen erfolgen mit in der Leuchte eingesetzter Lampe.

Die erzielte Strahldichteverteilung für die erfindungsgemäße Ausführungsform (NEW) ist in Figur 1 derjenigen der bekannten Niederdruckentladungslampe (OLD) gegenübergestellt, hierbei wird die mit einem Diodenarrayspektometer gemessene emittierte Strahlungsleistung (W) in Abhängigkeit von der Wellenlänge (nm) dargestellt. Es ist klar ersichtlich, dass die Strahldichteverteilung der erfindungsgemäßen Ausführungsform erhebliche Anteile im UV-A aufweist. Der für die bekannte Niederdruckentladungslampe im UV-A erkennbare kleine Peak kommt hingegen nicht von der Emission eines Leuchtstoffs, vielmehr handelt es sich hierbei um nicht umgewandelte Quecksilber-Strahlungsübergänge.

Die mit der erfindungsgemäßen Ausführungsform (NEW) erzielten Messergebnisse stellt Tabelle 1 im Vergleich zu den mit der bekannten Niederdruckentladungslampe (OLD) erhaltenen dar.

Die Angaben sind gemäß der Vorgaben aus ISO 3664:2009 in der genannten Leuchte mit einem Diodenarrayspektrometer bestimmt worden. u', v' bezeichnen die Farborte im CIE 1976 Uniform Chromaticity Scale Diagram (UCS) Farbraum, delta u bezeichnet den Abstand zum Zielfarbort u' = 0,2102 und v' = 0,4889, x10 und y10 sind die Farborte im CIE 1964 Farbraum für den 10° - Standardbetrachter. M_vis und M_uv bezeichnen die gemittelten Metamerieindizes für die Vergleichspaare für die D50 Normbeleuchtungsart gemäß CIE 51.2-1999. Ra8 bezeichnet den allgemeinen Farbwiedergabeindex CRI nach CIE 13-3-1995. Anhand dieser Norm sind die speziellen Indizes R1, R2, ..., R14 bestimmt.

Anhand dieser Werte ist ersichtlich, dass die erfindungsgemäße Ausführungsform näher am Zielfarbort im CIE 1976 UCS Farbraum liegt, delta u = 0,0030 im Vergleich zu delta u = 0,0068 für die bekannte Niederdruckentladungslampe. Auch der allgemeine Farbwiedergabeindex CRI liegt für die erfindungsgemäße Ausführungsform mit 97,1 näher an dem Idealwert 100. Auch die Forderung des ISO-Standards 3664, dass der Metamerie-Index im Sichtbaren M_vis <= 1.0 sowie im Ultravioletten M_uv <= 1,5 wird durch die erfindungsgemäße Ausführungsform mit M_vis = 0,7163 und M_uv = 0,9778 erfüllt. Die bekannte Niederdruckentladungslampe hingegen kann die Anforderungen mit M_uv = 3,3448 deutlich nicht erfüllen.

Mit einer erfindungsgemäßen Leuchtstoffzusammensetzung lassen sich somit vorteilhaft Niederdruckentladungslampen bereitstellen, die hervorragende Farbwiedergabeeigenschaften haben, wobei auch die Spektralanteile im nahen Ultraviolett gut wiedergegeben werden. Dies ist daran ersichtlich, dass ein Metamerie-Index im Ultravioletten M_uv <= 1.5 erzielbar ist. Insbesondere sind mit solchen erfindungsgemäßen Niederdruckentladungslampen die Anforderungen gemäß ISO-Standard 3664:2009 erfüllbar.

## Patentansprüche

1. Leuchtstoffzusammensetzung für Niederdruckentladungslampen zur Erzeugung von Strahlung mit einer Farbtemperatur größer 4800 K und einem sehr guten allgemeinen Farbwiedergabeindex CRI größer 90, wobei die Leuchtstoffzusammensetzung zumindest einen Halophosphat-Leuchtstoff, einen im roten Wellenlängenbereich emittierenden Leuchtstoff, einen im blaugrünen Wellenlängenbereich emittierenden Leuchtstoff, einen mit Europium dotierten im blauen Wellenlängenbereich emittierenden Leuchtstoff sowie einen mit Tb dotierten im grünen Wellenlängenbereich emittierenden Leuchtstoff beinhaltet,
**dadurch gekennzeichnet, dass**
die Leuchtstoffzusammensetzung einen Leuchtstoff mit einem Emissionsbereich im sichtbaren Bereich mit Wellenlängen größer 380nm und mindestens einer Emissionsbande im nahen Ultraviolett (UV-A) beinhaltet und die emittierte Intensität des Leuchtstoffs im sichtbaren Bereich kleiner als im UV-A Bereich ist.

2. Leuchtstoffzusammensetzung nach Anspruch 1,
**dadurch gekennzeichnet, dass**
die im sichtbaren Bereich emittierte Intensität des Leuchtstoffs mit einem Emissionsbereich im sichtbaren Bereich und mindestens einer Emissionsbande im nahen Ultraviolett (UV-A) zwischen 2% und 20% der durch den Leuchtstoff im nahen Ultraviolett (UV-A) emittierten Intensität beträgt.

3. Leuchtstoffzusammensetzung nach Anspruch 1 oder 2,
**dadurch gekennzeichnet, dass**
als im UV-A emittierender Leuchtstoff mit Europium dotiertes Strontiumtetraborat, SrB₄O₇:Eu, und/oder mit Europium dotiertes StrontiumMagnesiumphosphat SrMgP₂O₇:Eu und/oder mit Europium dotiertes StrontiumBarium-AluminiumSilikat(Sr,Ba)Al₂Si₂O₈:Eu und/oder mit Europium dotiertes Strontiumphospat Sr₃(PO₄):Eu und/oder CalciumWolframat CaWO₄ vorgesehen ist.

4. Leuchtstoffzusammensetzung nach einem der Ansprüche 1 - 3,
**dadurch gekennzeichnet, dass**
der Gewichtsanteil des im UV-A emittierenden Leuchtstoffs an der Leuchtstoffzusammensetzung zwischen 5% und 30% und insbesondere zwischen 10% und 15% beträgt.

5. Leuchtstoffzusammensetzung nach einem der Ansprüche 1 - 4,
**dadurch gekennzeichnet, dass**
als Halophosphat-Leuchtstoff mit Sb und Mn dotiertes Calciumhalophosphat Ca₁₀(PO₄)₆(F, Cl)₂:Sb,Mn,Cl vorgesehen ist.

6. Leuchtstoffzusammensetzung nach einem der Ansprüche 1 - 5,
**dadurch gekennzeichnet, dass**
der Gewichtsanteil des Halophosphat-Leuchtstoffs an der Leuchtstoffzusammensetzung zwischen 20% und 26% beträgt.

7. Leuchtstoffzusammensetzung nach einem der Ansprüche 1 - 6,
**dadurch gekennzeichnet, dass**
als im roten Wellenlängenbereich emittierender Leuchtstoff mit Ce und Mn dotiertes Gadoliniumzinkmagnesiumpentaborat Gd(Zn,Mg)B₅O₁₀:Ce,Mn vorgesehen ist.

8. Leuchtstoffzusammensetzung nach einem der Ansprüche 1 - 7,
**dadurch gekennzeichnet, dass**
der Gewichtsanteil des im roten Wellenlängenbereich emittierenden Leuchtstoffs an der Leuchtstoffzusammensetzung zwischen 30% und 36% beträgt.

9. Leuchtstoffzusammensetzung nach einem der Ansprüche 1 - 8,
**dadurch gekennzeichnet, dass**
als im blaugrünen Wellenlängenbereich emittierender Leuchtstoff mit Eu dotiertes Strontiumaluminat Sr₄Al₁₄O₂₅:Eu vorgesehen ist.

10. Leuchtstoffzusammensetzung nach einem der Ansprüche 1 - 9,
**dadurch gekennzeichnet, dass**
der Gewichtsanteil des im blaugrünen Wellenlängenbereich emittierenden Leuchtstoffs an der Leuchtstoffzusammensetzung zwischen 20% und 26% beträgt.

11. Leuchtstoffzusammensetzung nach einem der Ansprüche 1 - 10,
**dadurch gekennzeichnet, dass**
als mit Tb dotierter grün emittierender Leuchtstoff mit Tb dotiertes Cermagnesiumaluminat CeMgAl₁₁O₁₉:Tb vorgesehen ist.

12. Leuchtstoffzusammensetzung nach einem der Ansprüche 1 - 11,
**dadurch gekennzeichnet, dass**
der Gewichtsanteil des mit Tb dotierten grün emittierenden Leuchtstoffs an der Leuchtstoffzusammensetzung zwischen 2% und 8% beträgt.

13. Leuchtstoffzusammensetzung nach einem der Ansprüche 1 - 12,
**dadurch gekennzeichnet, dass**
als mit Europium dotierter blau emittierender Leuchtstoff mit Eu dotiertes Bariummagnesiumaluminat BaMgAl₁₀O₁₇:Eu und/oder mit Eu und Mn dotiertes Bariummagnesiumaluminat BaMg₂Al₁₆O₂₇:Eu,Mn und/oder mit Eu dotiertes Strontium-Clorophosphat Sr₁₀(PO₄)Cl₂:EU und/oder mit Eu dotiertes StrontiumCalcium-Clorophosphat (Sr,Ca)₁₀(PO₄)Cl₂:Eu vorgesehen ist.

14. Leuchtstoffzusammensetzung nach einem der Ansprüche 1 - 13,
**dadurch gekennzeichnet, dass**
der Gewichtsanteil des mit Eu dotierten blau emittierenden Leuchtstoffs an der Leuchtstoffzusammensetzung zwischen 0% und 6% beträgt.

15. Leuchtstoffzusammensetzung nach einem der Ansprüche 1 - 14,
**dadurch gekennzeichnet, dass**
ein im dunkelroten Wellenlängenbereich emittierender Leuchtstoff, insbesondere mit Mn dotiertes Magnesiumfluorogermanat Mg₄FGeO_{5,5}:Mn, vorgesehen ist.

16. Leuchtstoffzusammensetzung nach Anspruch 15,
**dadurch gekennzeichnet, dass**
der Gewichtsanteil des dunkelrot emittierenden Leuchtstoffs an der Leuchtstoffzusammensetzung zwischen 0% und 5% beträgt

17. Niederdruckentladungslampe mit einem Entladungsgefäß und einer auf der Innenseite desselben aufgebrachten Leuchtstoffbeschichtung,
**dadurch gekennzeichnet, dass**
die Leuchtstoffbeschichtung eine Leuchtstoffzusammensetzung gemäß einem oder mehreren der Ansprüche 1 bis 16 umfasst.

## Claims

1. A luminophore composition for low pressure discharge lamps for generating radiation with a color temperature of greater than 4800 K and a very good general color rendering index CRI of greater than 90, the luminophore composition comprising at least one halophosphate luminophore, a luminophore emitting in the red wavelength region, a luminophore emitting in the blue-green wavelength region, a europium-doped luminophore emitting in the blue wavelength region and a Tb-doped luminophore emitting in the green wavelength region, **characterized in that** the luminophore composition comprises a luminophore emitting in an emission range in the visible region with wavelengths of greater than 380 nm and at least one emission band in the near ultraviolet (UV-A) and the emitted intensity of the luminophore is smaller in the visible region than in the UV-A region.

2. The luminophore composition as claimed in claim 1, **characterized in that** the intensity emitted in the visible region by the luminophore having an emission range in the visible region and at least one emission band in the near ultraviolet (UV-A) is between 2% and 20% of the intensity emitted by the luminophore in the near ultraviolet (UV-A).

3. The luminophore composition as claimed in claim 1 or 2, **characterized in that** europium-doped strontium tetraborate, SrB₄O₇:Eu, and/or europium-doped strontium magnesium phosphate SrMgP₂O₇:Eu and/or europium-doped strontium barium-aluminum silicate (Sr,Ba)Al₂Si₂O₈:Eu and/or europium-doped strontium phosphate Sr₃(PO₄):Eu and/or calcium tungstate CaWO₄ is provided as the luminophore emitting in the UV-A.

4. The luminophore composition as claimed in one of claims 1-3, **characterized in that** the proportion by weight of luminophore emitting in the UV-A relative to the luminophore composition is between 5% and 30% and, in particular, between 10% and 15%.

5. The luminophore composition as claimed in one of claims 1-4, **characterized in that** Sb and Mn-doped calcium halophosphate Ca₁₀(PO₄)₆(F,Cl)₂:Sb,Mn,Cl is provided as the halophosphate luminophore.

6. The luminophore composition as claimed in one of claims 1-5, **characterized in that** the proportion by weight of halophosphate luminophore relative to the luminophore composition is between 20% and 26%.

7. The luminophore composition as claimed in one of claims 1-6, **characterized in that** Ce and Mn-doped gadolinium zinc magnesium pentaborate Gd(Zn,Mg)B₅O₁₀:Ce,Mn is provided as the luminophore emitting in the red wavelength region.

8. The luminophore composition as claimed in one of claims 1-7, **characterized in that** the proportion by weight of luminophore emitting in the red wavelength region relative to the luminophore composition is between 30% and 36%.

9. The luminophore composition as claimed in one of claims 1-8, **characterized in that** Eu-doped strontium aluminate Sr₄Al₁₄O₂₅:Eu is provided as the luminophore emitting in the blue-green wavelength region.

10. The luminophore composition as claimed in one of claims 1-9, **characterized in that** the proportion by weight of luminophore emitting in the blue-green wavelength region relative to the luminophore composition is between 20% and 26%.

11. The luminophore composition as claimed in one of the claims 1-10, **characterized in that** Tb-doped cerium magnesium aluminate CeMgAl₁₁O₁₉:Tb is provided as the Tb-doped luminophore emitting in the green wavelength region.

12. The luminophore composition as claimed in one of claims 1-11, **characterized in that** the proportion by weight of the Tb-doped luminophore emitting in the green wavelength region relative to the luminophore composition is between 2% and 8%.

13. The luminophore composition as claimed in one of claims 1-12, **characterized in that** Eu-doped barium magnesium aluminate BaMgAl₁₀O₁₇:Eu and/or Eu and Mn-doped barium magnesium aluminate BaMg₂Al₁₆O₂₇:Eu,Mn and/or Eu-doped strontium chlorophosphate Sr₁₀(PO₄)Cl₂:Eu and/or Eu-doped strontium calcium chlorophosphate (Sr,Ca)₁₀(PO₄)Cl₂:Eu is provided as the europium-doped luminophore emitting in the blue wavelength region.

14. The luminophore composition as claimed in one of claims 1-13, **characterized in that** the proportion by weight of the Eu-doped luminophore emitting in the blue wavelength region relative to the luminophore composition is between 0% and 6%.

15. The luminophore composition as claimed in one of claims 1-14, **characterized in that** a luminophore emitting in the dark red wavelength region, in particular Mn-doped magnesium fluorogermanate Mg₄FGeO_{5.5}:Mn is provided.

16. The luminophore composition as claimed in claim 15, **characterized in that** the proportion by weight of luminophore emitting in the dark red wavelength region relative to the luminophore composition is between 0% and 5%.

17. A low pressure discharge lamp comprising a discharge vessel and a luminophore coating applied to the inside thereof, **characterized in that** the luminophore coating comprises a luminophore composition as claimed in one or more of claims 1 to 16.

## Revendications

1. Composition de substance fluorescente pour lampe à décharge à basse pression pour la génération d'un rayonnement avec une température des couleurs supérieure à 4800 K et un indice de rendu des couleurs général IRC très bon supérieur à 90, la composition de substance fluorescente contenant au moins une substance fluorescente à l'halogénophosphate, une substance fluorescente émettant dans la plage de longueur d'onde rouge, une substance fluorescente émettant dans la plage de longueur d'onde bleu-vert, une substance fluorescente émettant dans la plage de longueur d'onde bleue dopée à l'europium ainsi qu'une substance fluorescente émettant dans la plage de longueur d'onde verte dopée au Tb,
**caractérisée en ce que**
la composition de substance fluorescente contient une substance fluorescente avec une plage d'émission dans la plage visible avec des longueurs d'onde supérieures à 380 nm et au moins une bande d'émission dans le proche ultraviolet (UV-A) et l'intensité émise de la substance fluorescente dans la plage visible est inférieure à la plage des UV-A.

2. Composition de substance fluorescente selon la revendication 1,
**caractérisée en ce que**
l'intensité de la substance fluorescente émise dans la plage visible avec une plage d'émission dans la plage visible et au moins une bande d'émission dans le proche ultraviolet (UV-A) représente entre 2 % et 20 % de l'intensité émise dans le proche ultraviolet (UV-A) par le biais de la substance fluorescente.

3. Composition de substance fluorescente selon la revendication 1 ou 2,
**caractérisée en ce qu'**
il est prévu en tant que substance fluorescente émettant dans les UV-A du tétraborate de strontium dopé à l'europium, SrB₄O₇:Eu, et ou du phosphate de strontium et de magnésium dopé à l'europium SrMgP₂O₇:Eu et/ou du silicate de strontium, de baryum et d'aluminium dopé à l'europium (Sr,Ba)Al₂Si₂O₈:Eu et/ou du phosphate de strontium dopé à l'europium Sr₃(Po₄):Eu et/ou du wolframate de calcium CaWO₄.

4. Composition de substance fluorescente selon l'une des revendications 1-3,
**caractérisée en ce que**
la part en poids de la substance fluorescente émettant dans les UV-A dans la composition de substance fluorescente représente entre 5 % et 30 % et en particulier entre 10 % et 15 %.

5. Composition de substance fluorescente selon l'une des revendications 1-4,
**caractérisée en ce qu'**
il est prévu en tant que substance fluorescente à l'halogénophosphate de l'halogénophosphate de calcium dopé au Sb et au Mn Ca₁₀(PO₄)₆(F,Cl)₂:Sb,Mn,Cl.

6. Composition de substance fluorescente selon l'une des revendications 1-5,
**caractérisée en ce que**
la part en poids de la substance fluorescente à l'halogénophosphate dans la composition de substance fluorescente représente entre 20 % et 26 %.

7. Composition de substance fluorescente selon l'une des revendications 1-6,
**caractérisée en ce qu'**
il est prévu en tant que substance fluorescente émettant dans la plage de longueur d'onde rouge du pentaborate de gadolinium, de zinc et de magnésium dopé au Ce et au Mn Gd(Zn,Mg)B₅O₁₀:Ce,Mn.

8. Composition de substance fluorescente selon l'une des revendications 1-7,
**caractérisée en ce que**
la part en poids de la substance fluorescente émettant dans la plage de longueur d'onde rouge dans la composition de substance fluorescente représente entre 30 % et 36 %.

9. Composition de substance fluorescente selon l'une des revendications 1-8,
**caractérisée en ce qu'**
il est prévu en tant que substance fluorescente émettant dans la plage de longueur d'onde bleu-vert de l'aluminate de strontium dopé à l'Eu Sr₄Al₁₄O₂₅:Eu.

10. Composition de substance fluorescente selon l'une des revendications 1-9,
**caractérisée en ce que**
la part en poids de la substance fluorescente émettant dans la plage de longueur d'onde bleu-vert dans la composition de substance fluorescente représente entre 20 % et 26 %.

11. Composition de substance fluorescente selon l'une des revendications 1-10,
**caractérisée en ce qu'**
il est prévu en tant que substance fluorescente émettant dans le vert dopée au Tb de l'aluminate de cer-magnésium dopé au Tb CeMgAl₁₁O₁₉:Tb.

12. Composition de substance fluorescente selon l'une des revendications 1-11,
**caractérisée en ce que**
la part en poids de la substance fluorescente émettant dans le vert dopée au Tb dans la composition de substance fluorescente représente entre 2 % et 8 %.

13. Composition de substance fluorescente selon l'une des revendications 1-12,
**caractérisée en ce qu'**
il est prévu en tant que substance fluorescente émettant dans le bleu dopée à l'europium de l'aluminate de baryum et de magnésium dopé à l'Eu BaMgAl₁₀O₁₇:Eu et/ou de l'aluminate de baryum et de magnésium dopé à l'Eu et au Mn BaMg₂Al₁₆O₂₇:Eu,Mn et/ou du chlorophosphate de strontium dopé à l'Eu Sr₁₀(PO₄)Cl₂:Eu et/ou du chlorophosphate de strontium et de calcium dopé à l'Eu (Sr,Ca)₁₀(PO₄)C₁₂:Eu.

14. Composition de substance fluorescente selon l'une des revendications 1-13,
**caractérisée en ce que**
la part en poids de la substance fluorescente émettant dans le bleu dopée à l'Eu dans la composition de substance fluorescente représente entre 0 % et 6 %.

15. Composition de substance fluorescente selon l'une des revendications 1-14,
**caractérisée en ce qu'**
il est prévu une substance fluorescente émettant dans la plage de longueur d'onde rouge foncé, en particulier du fluorogermanate de magnésium dopé au Mn Mg₄FGeO_{5,5}:Mn.

16. Composition de substance fluorescente selon la revendication 15,
**caractérisée en ce que**
la part en poids de la substance fluorescente émettant dans le rouge foncé dans la composition de substance fluorescente représente entre 0 % et 5 %.

17. Lampe à décharge à basse pression avec une enceinte à décharge et un revêtement de substance fluorescente appliqué sur la même face intérieure,
**caractérisée en ce que**
le revêtement de substance fluorescente comprend une composition de substance fluorescente selon l'une ou plusieurs des revendications 1 à 16.
